# FASCICULE DE BREVET EUROPEEN

(11) **EP 0 631 357 B1**
(45) Date de publication et mention de la délivrance du brevet: **06.08.1997**
(21) Numéro de dépôt: 94401381.2
(22) Date de dépôt: 20.06.1994
(51) Int. Cl.: H02G 1/14, H02G 15/18

(54) **Support tubulaire de pose d'un manchon élastique rétractable**
Rohrförmiger Träger zum Montieren einer elastischen schrumpfbaren Hülse
Tubular support for mounting an elastic shrinkable sleeve

(30) Priorité: 25.06.1993 FR 9307774
(43) Date de publication de la demande: 28.12.1994
(73) Titulaire: EUROMOLD, B-1060 Bruxelles (BE)
(72) Inventeur: Crepel, Denis, B-9440 Erembodegem (BE); Cardinaels, Jozef, B-9080 Lochristi (BE)
(74) Mandataire: Buffiere, Michelle

(56) Documents cités:
- DE-C- 961 447
- FR-A- 2 592 825
- US-A- 4 506 430

## Description

La présente invention porte sur un support tubulaire de pose d'un manchon élastique rétractable, permettant la mise en place du manchon sur un élément cylindrique qu'il doit recouvrir avec serrage.

Ce type de support est en tant que tel déjà connu. Il reçoit le manchon pré-expansé et est enfilé sur l'élément cylindrique, de diamètre extérieur inférieur à celui intérieur du support, devant recevoir le manchon. Le support est dégagé du dessous du manchon par coulissement sur l'élément cylindrique, pour la mise en place et la rétraction simultanée du manchon sur l'élément cylindrique.

Cet élément cylindrique est en particulier un équipement terminal ou une jonction de câbles d'énergie. Il peut bien entendu être tout autre élément devant recevoir un manchon élastique de protection, rétracté fortement sur l'élément.

Le document FR-A-2 592 825 décrit un tel support. Ce support est constitué par un tube rigide en plastique, dont la surface extérieure est recouverte sur au moins une partie de la longueur du tube d'un film à faible coefficient de frottement. Ce film est par exemple un film de polyester ayant un revêtement silicone. Il s'étend sur le tube sensiblement depuis l'une de ses extrémités, dite extrémité avant du tube. Il est fixé à cette extrémité avant contre la surface intérieure du tube et est par ailleurs libre sur le tube.

Le manchon élastique, positionné préalablement en expansion sur le tube recouvert par le film, est mis en place sur l'élément cylindrique par coulissement arrière du tube sur l'élément, en maintenant le manchon relativement à son emplacement sur cet élément. Ce coulissement est assuré en tirant sur l'autre extrémité dite arrière du tube, cette extrémité arrière étant avantageusement à cet effet non recouverte par le film. Le tube se dégage ainsi progressivement du-dessous du manchon, qui se trouve au fur et à mesure directement en place et se rétracte simultanément sur l'élément. Au cours de ce mouvement du tube, le film se retourne sur lui-même en bout de l'extrémité avant du tube, entre l'élément cylindrique et le manchon en place et rétracté sur ce dernier. Le dégagement du film est obtenu par une course correspondante supplémentaire arrière du tube sur l'élément.

Un tel support est en pratique utilisable pour la pose de manchons élastiques relativement courts et ayant une épaisseur relativement faible, ceci afin d'éviter tout blocage ou déchirure du film entre l'élément cylindrique et le manchon rétracté en place, au cours de son propre dégagement. Son utilisation est délicate sinon impossible lorsque les manchons sont de grande longueur et/ou d'épaisseur importante.

La présente invention a pour but de remédier à ce problème et ainsi de permettre la pose sans difficulté de manchons élastiques plus ou moins longs et plus ou moins épais.

Elle a pour objet un support tubulaire de pose d'un manchon élastique rétractable, recevant le manchon expansé pour sa pose sur un élément cylindrique rigide enfilé dans ledit support et comportant un tube rigide et un film à faible coefficient de frottement recouvrant la surface extérieure du tube rigide, sur au moins une partie de la longueur du tube rigide, depuis sensiblement une extrémité dite avant dudit tube rigide, à laquelle correspond un bord avant dudit film, caractérisé en ce que ledit film est monté totalement libre relativement audit tube rigide et en ce que le support tubulaire comporte un moyen de guidage et d'entraînement dudit film, depuis la surface extérieure dudit tube rigide, autour de l'extrémité avant et le long de la surface intérieure dudit tube rigide.

Ce support présente de préférence au moins l'une des caractéristiques additionnelles suivantes :
- les extrémités du tube rigide sont arrondies;
- ledit moyen de guidage et d'entraînement est constitué par un jeu de courroies, ayant de préférence un faible coefficient de frottement, montées sur le film et fermées sur elles-mêmes par l'intérieur du tube ou solidaires du film et fermées sur le film par l'intérieur du tube, ou est constitué par un tube auxiliaire coulissant intérieurement dans ledit tube rigide, prévu sensiblement plus long que ledit tube rigide et monté saillant sur l'autre extrémité dite arrière dudit tube rigide, auquel est solidarisé intérieurement le bord avant dudit film,
- ledit tube rigide est pourvu d'un moyen arrière de prise et d'actionnement à la main;
- ledit tube rigide présente un état de surface extérieure granuleux, lui conférant un coefficient de frottement réduit relativement audit film.

Les caractéristiques et avantages de la présente invention ressortiront de la description faite ci-après d'exemples préférés de réalisation illustrés dans les dessins ci-annexés. Dans ces dessins :
- la figure 1 est une vue en coupe d'un support tubulaire selon l'invention, montré portant un manchon élastique rétractable à mettre en place,
- la figure 2 est une vue analogue à celle de la figure 1, illustrant la pose du manchon porté par le support, sur un élément cylindrique,
- la figure 3 illustre en coupe une première variante de réalisation du support de la figure 1,
- la figure 4 illustre en coupe une deuxième variante de réalisation du support de la figure 1,
- les figures 5, 6 et 7 illustrent en perspective des variantes de réalisation données par rapport à la figure 1, en ce que concerne essentiellement des dispositions prévues sur le support pour son actionnement.

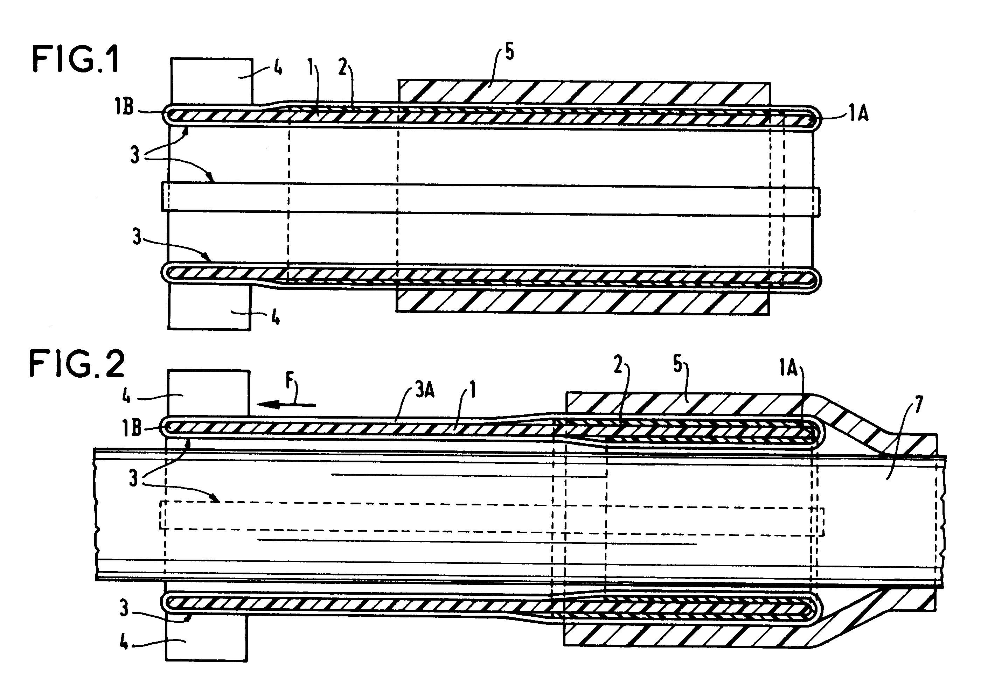

Le support tubulaire représenté dans la figure 1 comporte un tube rigide 1, dont la surface extérieure est recouverte d'un film 2, souple et résistant, ayant un faible coefficient de frottement et s'étendant sur au moins une partie de la longueur du tube, depuis une extrémité dite avant 1A du tube sensiblement. Le film est en polyester ou analogue et porte sur ses deux faces une pellicule anti-adhésive, par exemple à base de silicone, lui donnant un très faible coefficient de frottement.

Ce film 2 n'est pas fixé au tube 1, mais totalement libre relativement au tube. Il lui est associé un moyen d'entraînement, autour de l'extrémité avant 1A et longitudinalement à l'intérieur du tube, constitué par un jeu de courroies 3.

Les courroies 3 sont fermées sur elles-mêmes et libres sur le film et contre la surface intérieure du tube, entre les extrémités avant et arrière 1A et 1B du tube. Elles maintiennent le film sur le tube et permettent le guidage et l'entraînement du film autour de l'extrémité avant 1A du tube ou éventuellement son extrémité arrière, et le long de sa surface intérieure, quand elles sont elles-mêmes entraînées. Ces courroies sont résistantes et ont de préférence un faible coefficient de friction. Elles peuvent être de même nature que le film 2 et comme celui-ci être revêtues d'une pellicule anti-adhésive, notamment à base de silicone.

Les deux extrémités du tube 1 sont arrondies, pour présenter un rayon de courbure évitant toute déchirure ou endommagement du film et des courroies dans leur mouvement autour d'elles.

La partie terminale arrière du tube 1 présente en outre un épaulement segmenté en secteurs 4, largement saillants sur sa périphérie, entre lesquels passent librement les courroies 3, constituant un moyen de prise à la main du tube pour son actionnement sans contact avec les courroies et sans entrave pour leur mouvement.

Avantageusement, pour réduire davantage encore les forces de friction du film et des courroies sur le tube, la surface extérieure du tube est granuleuse.

Cet état granuleux de la surface extérieure du tube 1 est obtenu par traitement des surfaces correspondantes des pièces de moulage du tube ou par revêtement de la surface extérieure initialement lisse du tube à l'aide d'un film auxiliaire granuleux, rapporté et collé sur celle-ci.

Dans cette figure 1, on a en outre illustré un manchon élastique rétractable 5 porté par le tube, en vue de sa pose ultérieure sur un élément cylindrique rigide de diamètre extérieur inférieur à celui intérieur du tube. Ce manchon 5 est monté en expansion sur la partie du tube 1 qui est recouverte par le film 2.

La figure 2 illustre la pose du manchon élastique 5 sur un tel élément cylindrique rigide 7, qui est illustré sous la forme d'un corps cylindrique relativement long et peut être en particulier un câble électrique, un équipement terminal de câble ou une jonction de deux câbles raccordés.

Le tube portant le manchon expansé est positionné sur l'élément cylindrique, de sorte que le manchon se trouve en regard de son emplacement sur l'élément, sur lequel il va se rétracter directement avec sa pose. Cette mise en place du manchon 5 sur l'élément cylindrique 7 s'effectue en tirant sur le tube 1, par son extrémité arrière 1B, en se servant des secteurs épaulés 4. Le coulissement arrière du tube sur l'élément, pour son dégagement résultant du dessous du manchon, est schématisé par la flèche F. Il est assuré tout en maintenant, par exemple à la main, le manchon en position au-dessus de son emplacement définitif sur l'élément.

Ce coulissement arrière du tube 1 provoque l'entraînement, en sens inverse de la flèche F, des brins extérieurs 3A des courroies 3 sur le tube 1 et, par ces courroies, l'entraînement résultant du film 2 autour de l'extrémité avant 1A du tube et le long de la surface intérieure de celui-ci, vers son extrémité arrière 1B. Le film 2 se dégage ainsi directement du manchon élastique 5 se rétractant au fur et à mesure du mouvement arrière du tube sur l'élément cylindrique. On évite alors tout blocage possible du film 2 entre l'élément cylindrique et le manchon rétracté, au cours de son dégagement rendu nécessaire du dessous du manchon rétracté, dans les réalisations connues indiquées ci-avant.

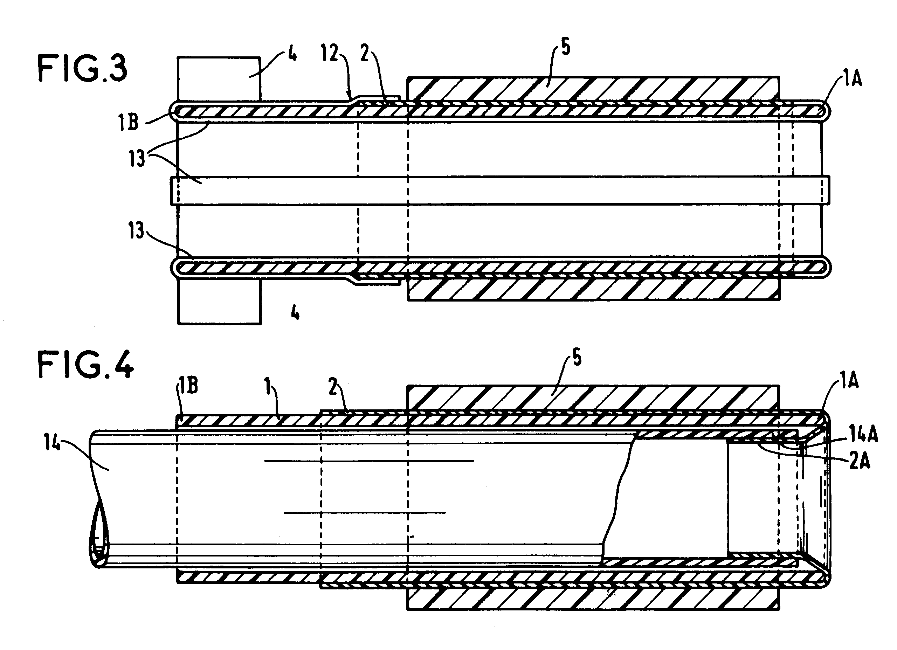

La figure 3 montre une variante de réalisation par rapport à la figure 1, dans laquelle les courroies notées 13 sont solidaires du film 2 qui recouvre la partie du tube 1 portant le manchon élastique 5. Ces courroies 13 sont découpées dans le film initial noté 12, prévu de longueur légèrement supérieure au double de la longueur du tube. Elles s'étendent depuis le bord avant du film 2, situé sensiblement à l'extrémité avant 1A du tube, jusqu'à l'extrémité arrière 1B du tube par l'intérieur de ce tube et sont fixées, par exemple par collage, au bord opposé arrière du film 2.

En variante, les courroies 13 sont initialement indépendantes du film 2 et solidarisées par collage aux bords avant et arrière du film 2 sur le tube 1.

Le coulissement arrière du tube 1, pour son dégagement du dessous du manchon 5, s'accompagne d'une rotation du film 2 autour de l'extrémité avant du tube et d'une avance du film 2 contre la surface intérieure du tube.

Dans la figure 4 on a illustré une autre variante par rapport à la figure 1, dans laquelle le moyen d'entraînement du film 2 est constitué par un tube auxiliaire intérieur 14. Ce tube auxiliaire 14 est de diamètre extérieur légèrement inférieur au diamètre intérieur du tube 1, pour son coulissement dans ce dernier, son diamètre intérieur restant légèrement supérieur au diamètre extérieur de l'élément cylindrique devant recevoir le manchon élastique 5. Le bord avant 2A du film 2 est dans cette réalisation fixé à l'extrémité avant 14A du tube auxiliaire intérieur 14, de préférence sur la surface intérieure de celui-ci, par exemple par collage.

Le coulissement arrière du tube 1 est accompagné d'un coulissement arrière du tube auxiliaire intérieur 14 effectué par l'opérateur. Le coulissement arrière du tube 1 peut être obtenu sans nécessiter de secteurs épaulés sur l'extrémité arrière de celui-ci. Le tube auxiliaire est quant à lui légèrement plus long que le tube 1 et est monté légèrement saillant en bout de l'extrémité arrière 1B du tube 1.

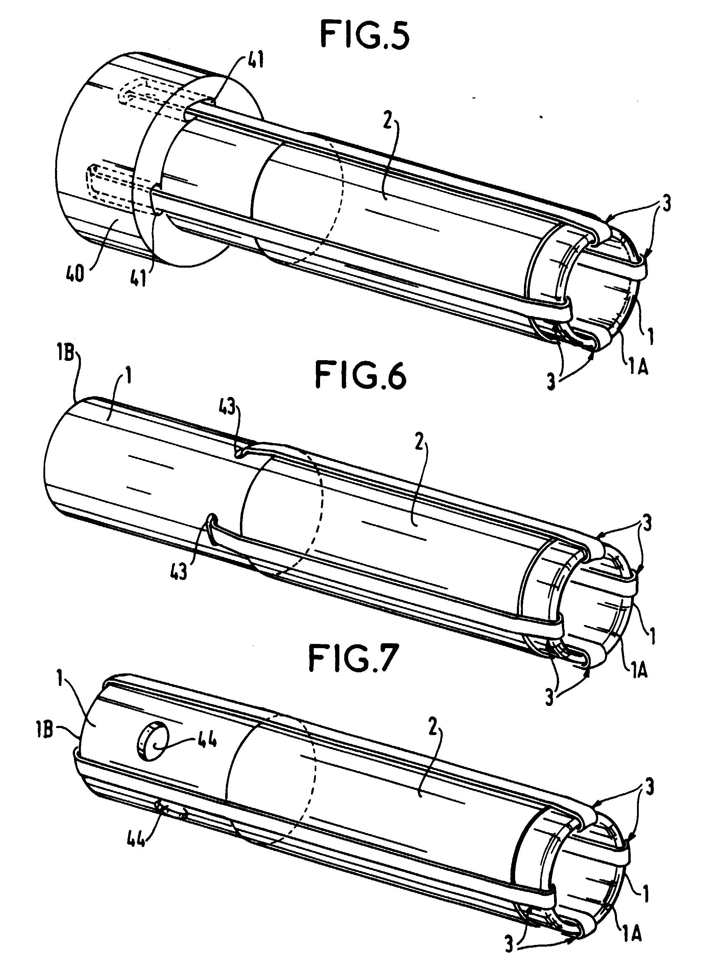

Les figures 5 à 7 illustrent des variantes données par rapport à la figure 1, en ce qui concerne les moyens de préhension du tube 1 pour son coulissement arrière et les éventuelles modifications résultantes pour les courroies 3.

Dans la figure 5, le tube 1 présente un épaulement périphérique 40 sur sa partie terminale arrière. Cet épaulement est percé à sa base de canaux 41, afin de laisser un passage à chaque courroie 3.

Dans la figure 6, le tube 1 est percé de trous 43 espacés les uns des autres sur sa périphérie au-delà du film 2 et situés à proximité de l'extrémité arrière 1B du tube. Ces trous 43 sont affectés chacun au passage de l'une des courroies 3 entre les surfaces intérieure et extérieure du tube 1, de manière à laisser la partie terminale arrière du tube 1 totalement libre pour sa prise en main. Cette partie terminale arrière peut bien entendu avoir un épaulement périphérique facilitant sa traction arrière.

Dans la figure 7, le tube 1 est percé d'ouvertures 44 espacées les unes des autres sur sa périphérie et situées à proximité de son extrémité arrière 1B et entre les courroies 3, ces courroies courant d'un bout à l'autre du tube. Ces ouvertures 44 permettent à l'opérateur d'y glisser les doigts pour une meilleure prise en main du tube ou d'y insérer un outil, pour la traction arrière du tube.

Bien entendu, les courroies 3 recouvrant le film 2 selon les réalisations des figures 5 à 7 peuvent être solidaires du film comme dans la figure 3. Il est évident également que les courroies illustrées au nombre de quatre dans les figures 1 à 3 et 5 à 7 peuvent être en nombre différent.

Bien entendu, le tube rigide 1 et l'éventuel tube auxiliaire 14 peuvent présenter une ligne d'amorce de rupture ou tout moyen équivalent, pour le dégagement final de chacun de la périphérie de l'un ou des câbles raccordés dont la jonction est protégée par le manchon en place.

## Revendications

1. Support tubulaire de pose d'un manchon élastique (5) rétractable, recevant le manchon (5) expansé pour sa pose sur un élément cylindrique rigide (7) enfilé dans ledit support et comportant un tube rigide (1) et un film (2) à faible coefficient de frottement recouvrant la surface extérieure du tube rigide (1), sur au moins une partie de la longueur du tube rigide (1), depuis sensiblement une extrémité dite avant (1A) dudit tube rigide (1), à laquelle correspond un bord avant dudit film (2), caractérisé en ce que ledit film (2) est monté totalement libre relativement audit tube rigide (1) et en ce que le support tubulaire comporte un moyen de guidage et d'entraînement (3, 13, 14) dudit film (2), depuis la surface extérieure dudit tube rigide, autour de l'extrémité avant (1A) et le long de la surface intérieure dudit tube rigide (1).

2. Support selon la revendication 1, caractérisé en ce qu'au moins ladite extrémité avant (1A) dudit tube rigide (1) est arrondie.

3. Support selon l'une des revendications 1 et 2, caractérisé en ce que ledit moyen de guidage et d'entraînement est constitué par un jeu de courroies (3), ayant de préférence un faible coefficient de frottement, montées sur le film (2) et le tube rigide (1) et fermées sur elles-mêmes par l'intérieur du tube contre sa surface intérieure.

4. Support selon l'une des revendications 1 et 2, caractérisé en ce que ledit moyen de guidage et d'entraînement est constitué par un jeu de courroies (13) ayant de préférence un faible coefficient de frottement, solidaires du bord avant et du bord opposé arrière dudit film (2) et les reliant par l'intérieur du tube rigide.

5. Support selon la revendication 4, caractérisé en ce que lesdites courroies (13) sont découpées, depuis le bord avant dudit film (2), dans un film initial (12), et sont solidarisées sur le bord arrière dudit film (2).

6. Support selon l'une des revendications 1 à 5, caractérisé en ce que ledit tube rigide (1) présente un jeu de trous (43) affecté au jeu de courroies et situé à proximité de son autre extrémité dite arrière (1B) pour le passage desdites courroies dans chacun d'eux.

7. Support selon l'une des revendications 1 et 2, caractérisé en ce que ledit moyen de guidage et d'entraînement (14) est constitué par un tube auxiliaire, monté coulissant dans ledit tube rigide (1) et prévu sensiblement plus long et saillant sur l'autre extrémité dite arrière (1B) dudit tube rigide, auquel est solidarisé le bord avant dudit film (2).

8. Support selon l'une des revendications 3 à 7, caractérisé en ce que ledit tube rigide (1) comporte un moyen arrière de prise et d'actionnement à la main (4, 40, 44), prévu sur celle de ses parties terminales non recouverte par ledit film et définissant son autre extrémité dite arrière.

9. Support selon la revendication 8, caractérisé en ce que ledit moyen arrière (44) est un jeu d'ouvertures.

10. Support selon la revendication 8, caractérisé en ce que ledit moyen arrière (4, 40) est un épaulement périphérique.

11. Support selon la revendication 8, et dans lequel ledit moyen de guidage et d'entraînement dudit film est un jeu de courroies, caractérisé en ce que ledit épaulement (40) est segmenté en secteurs laissant passer librement entre eux lesdites courroies (3).

12. Support selon la revendication 8 et dans lequel ledit moyen de guidage et d'entraînement dudit film est un jeu de courroies, caractérisé en ce que ledit épaulement (4) est percé de canaux (41) de passage desdites courroies (3).

13. Support selon l'une des revendications 1 à 12 caractérisé en ce que ledit tube rigide (1) présente extérieurement un état de surface granuleux, lui conférant un coefficient de frottement réduit relativement audit film.

## Patentansprüche

1. Rohrförmiger Träger zum Aufziehen einer schrumpfbaren elastischen Hülle (5), der die gedehnte Hülle (5) zu ihrer Positionierung auf einem steifen zylindrischen Element (7) empfängt, das in den Träger eingeschoben wird, und der ein steifes Rohr (1) und eine Haut (2) mit geringem Reibungskoeffizient aufweist, die die Außenfläche des steifen Rohrs (1) über mindestens einen Teil seiner Länge i.w. von einem vorderen Ende (1A) dieses steifen Rohrs (1) aus bedeckt, dem ein vorderer Rand der Haut (2) entspricht, dadurch gekennzeichnet, daß die Haut (2) in Bezug auf das steife Rohr (1) völlig frei montiert ist und daß der rohrförmige Träger ein Führungs- und Antriebsmittel (3, 13, 14) für diese Haut (2) von der Außenfläche des steifen Rohrs um das vordere Ende (1A) herum und entlang der Innenfläche des steifen Rohrs (1) enthält.

2. Träger nach Anspruch 1, dadurch gekennzeichnet, daß mindestens das vordere Ende (1A) des steifen Rohrs (1) abgerundet ist.

3. Träger nach einem der Ansprüche 1 und 2, dadurch gekennzeichnet, daß das Führungs- und Antriebsmittel aus einem Satz von Treibriemen (3) mit vorzugsweise einem geringen Reibungskoeffizienten besteht, die auf die Haut (2) und auf das steife Rohr (1) montiert und durch das Innere des Rohrs an dessen Innenfläche auf sich selbst zurückgeschleift sind.

4. Träger nach einem der Ansprüche 1 und 2, dadurch gekennzeichnet, daß das Führungs- und Antriebsmittel aus einem Satz von Treibriemen (3) mit vorzugsweise einem geringen Reibungskoeffizienten besteht, die fest mit dem vorderen Rand und dem entgegengesetzten rückwärtigen Rand der Haut (2) verbunden sind und sie entlang der Innenseite des steifen Rohrs verbinden.

5. Träger nach Anspruch 4, dadurch gekennzeichnet, daß die Treibriemen (3) ausgehend vom vorderen Rand der Haut (2) aus einer ursprünglichen Haut (12) ausgeschnitten und mit dem rückwärtigen Rand der Haut (2) fest verbunden sind.

6. Träger nach einem der Ansprüche 1 bis 5, dadurch gekennzeichnet, daß das steife Rohr (1) einen Satz von Löchern (43) aufweist, die dem Satz von Treibriemen zugeordnet sind und sich in der Nähe des rückwärtigen Endes (1B) des Rohrs für den Durchlaß der Treibriemen durch je eines dieser Löcher befinden.

7. Träger nach einem der Ansprüche 1 und 2, dadurch gekennzeichnet, daß das Führungs- und Antriebsmittel (14) aus einem Hilfsrohr besteht, das innen im steifen Rohr (1) gleitet und deutlich länger und auf dem rückwärtigen Ende (1B) des steifen Rohrs vorstehend montiert ist, wobei der vordere Rand der Haut (2) am Hilfsrohr befestigt ist.

8. Träger nach einem der Ansprüche 3 bis 7, dadurch gekennzeichnet, daß das steife Rohr (1) ein rückwärtiges Greifmittel zur manuellen Betätigung (4, 40, 44) besitzt, das auf dem seiner Enden vorgesehen ist, das nicht von der Haut bedeckt ist und sein rückwärtiges Ende darstellt.

9. Träger nach Anspruch 8, dadurch gekennzeichnet, daß das rückwärtige Greifmittel (44) ein Satz von Öffnungen ist.

10. Träger nach Anspruch 8, dadurch gekennzeichnet, daß das rückwärtige Greifmittel (4, 40) eine umlaufende Schulter ist.

11. Träger nach Anspruch 8, bei dem das Führungs- und Antriebsmittel für die Haut ein Satz von Treibriemen ist, dadurch gekennzeichnet, daß die Schulter (40) in Sektoren aufgeteilt ist, zwischen denen die Treibriemen (3) frei verlaufen.

12. Träger nach Anspruch 8, bei dem das Führungs- und Antriebsmittel der Haut ein Satz von Treibriemen ist, dadurch gekennzeichnet, daß die Schulter (4) Kanäle (41) für den Durchlaß der Treibriemen (3) aufweist.

13. Träger nach einem der Ansprüche 1 bis 12, dadurch gekennzeichnet, daß das steife Rohr (1) eine körnige Außenflächen besitzt, die ihm einen in Bezug auf die Haut reduzierten Reibungskoeffizienten verleiht.

## Claims

1. A tubular support for installing a shrinkable elastic sleeve (5), the support receiving the expanded sleeve (5) for the purpose of installing it on a rigid cylindrical element (7) threaded through said support, the support comprising a rigid tube (1) and a film (2) having a low coefficient of friction covering the outside surface of the rigid tube (1) over at least a fraction of the length of the rigid tube (1) and running substantially from a "front" end (1A) thereof, which end corresponds to a front margin of said film (2), the support being characterized in that said film (2) is mounted so as to be completely free relative to said rigid tube (1), and in that the tubular support includes guide and drive means (3, 13, 14) for said film (2) for guiding and driving said film from the outside surface of said rigid tube, around the front end (1A), and along the inside surface of said rigid tube (1).

2. A support according to claim 1, characterized in that at least said front end (1A) of said rigid tube (1) is rounded.

3. A support according to claim 1 or 2, characterized in that said guide and drive means is constituted by a set of belts (3) preferably having a low coefficient of friction, the belts being mounted on the film (2) and the rigid tube (1), and forming closed loops passing via the inside of the tube and against the inside surface thereof.

4. A support according to claim 1 or 2, characterized in that said guide and drive means is constituted by a set of belts (13) preferably having a low coefficient of friction, secured to the front margin and to the rear opposite margin of said film (2) and connecting said margins together via the inside of the rigid tube.

5. A support according to claim 4, characterized in that said belts (13) are cut out from an initial film (12), extending from the front margin of said film (2) and being secured to the rear margin of said film (2).

6. A support according to any one of claims 1 to 5, characterized in that said rigid tube (1) has a set of holes (43) for the set of belts and situated close to the "rear" other end (1B) of the tube, each hole serving to pass a respective one of said belts.

7. A support according to claim 1 or 2, characterized in that drive and guide means (14) is constituted by an auxiliary tube slidably mounted in said rigid tube (1) and significantly longer than said rigid tube, projecting from the "rear" other end (1B) of said rigid tube, and secured to the front margin of said film (2).

8. A support according to any one of claims 3 to 7, characterized in that said rigid tube (1) includes rear means for enabling it to be grasped and actuated in the hand (4, 40, 44), and that are provided on the end portions of the rigid tube that are not covered by said film, which end portions define a "rear" other end of said rigid tube.

9. A support according to claim 8, characterized in that said rear means (44) comprise a set of openings.

10. A support according to claim 8, characterized in that said rear means (4, 40) comprise a peripheral shoulder.

11. A support according to claim 8, and in which said guide and drive means for said film comprises a set of belts, characterized in that said shoulder (40) is segmented into sectors allowing said belts (3) to pass freely between them.

12. A support according to claim 8 and in which said guide and drive means for said film comprises a set of belts, characterized in that said shoulder (4) is pierced by channels (41) for passing said belts (3).

13. A support according to any one of claims 1 to 12, characterized in that said rigid tube (1) has an outside surface state that is granular, thereby imparting a lower coefficient of friction thereto relative to said film.
